# EUROPEAN PATENT APPLICATION

(11) **EP 4 656 444 A1**
(43) Date of publication of application: **03.12.2025**
(21) Application number: 24767331.2
(22) Date of filing: 28.02.2024
(51) Int. Cl.: B60L 53/24, B60L 50/51, B60L 53/10, H02M 1/42, H02M 3/335, H02M 7/797, H02P 27/06

(54) **CHARGING SYSTEM FOR ELECTRIC VEHICLE**

(30) Priority: 06.03.2023 KR 20230029388
(71) Applicant: Hansae Mobility Co., Ltd., Daegu 42981 (KR)
(72) Inventor: NOH, Seung Soo, Dalseong-Gun Daegu 42981 (KR); KIM, Min Sung, Dalseong-Gun Daegu 42981 (KR)
(74) Representative: Manitz Finsterwald Patent- und Rechtsanwaltspartnerschaft mbB
(86) International application number: PCT/KR2024/002552
(87) International publication number: WO 2024/186042

(57) **Abstract**

A charging system for an electric vehicle, configured to charge a battery of the electric vehicle, comprises: a motor inverter; a power factor correction circuit configured to act as an AC-DC converter for implementing an onboard charger function that charges the battery using an AC power source; inductors respectively connected to the stator windings of the motor and the power factor correction circuit; and a controller configured to control electrical connection of the power factor correction circuit to the stator windings of the motor and to control operation of the motor inverter and the power factor correction circuit. The motor inverter is configured, under control of the controller, to selectively form bidirectional current flow and thereby be implemented to selectively operate as one of a DC-AC inverter, a DC-DC boost converter, and a DC-DC buck converter. The power factor correction circuit is configured, under control of the controller, to selectively form bidirectional current flow and thereby selectively operate as either an AC-DC converter or a DC-AC converter.

## Description

### [Technical Field]

This disclosure relates to a charging system for electric vehicles.

### [Background Art]

A charging device for an electric vehicle (EV) that uses power from a battery operates with a charging voltage of either 400V DC or 800V DC. Since ultra-fast charging devices using 800V voltage consume a relatively large amount of power, approximately 100 kW, their widespread application is limited, and as a result, 400V fast charging devices are predominantly used.

In order to improve the energy efficiency and usability of electric vehicles, the demand for fast charging has been increasing, and as a solution, 800V battery systems have begun to be adopted, which in turn requires 800V charging through boost converters and onboard chargers (OBC) when using 400V fast charging devices. However, conventional methods face issues such as large size, heavy weight, and high cost, and therefore, a compact charging device that can be mounted in vehicles is required.

### <Prior Art Document >

- Korean Patent Publication No. 10-2019-0119778 (2019.10.23.)

### [Detailed Description of the Invention]

### [Technical Problem]

The problem to be solved by the present invention is to provide a charging system for electric vehicles having a compact structure.

### [Technical Solutions]

A charging system for an electric vehicle, configured to charge a battery of the electric vehicle, according to an embodiment of the present invention includes: a motor inverter configured to act as a DC-AC inverter to convert a DC voltage of the battery into an AC voltage capable of driving a motor of the electric vehicle, and to apply the AC voltage to stator windings of the motor; a power factor correction circuit configured to act as an AC-DC converter to implement an onboard charger function for charging the battery using a commercial AC power source, and to be selectively electrically connected to the stator windings of the motor; an inductor connected in series between the stator windings of the motor and the power factor correction circuit; and a controller configured to control electrical connection of the power factor correction circuit to the stator windings of the motor, and to control operation of the motor inverter and the PFC circuit. The motor inverter is configured, under control of the controller, to selectively form bidirectional current flow and thereby selectively operate as one of a DC-AC inverter, a DC-DC boost converter, and a DC-DC buck converter. The power factor correction circuit is configured, under control of the controller, to selectively form bidirectional current flow and thereby selectively operate as either an AC-DC converter or a DC-AC converter.

When driving of the motor is required, the controller may control the power factor correction circuit to be electrically disconnected from the stator windings of the motor, and may control the motor inverter to form a current flow from the battery to the stator windings of the motor so as to operate as the DC-AC inverter.

The controller, when charging of the battery by the commercial AC power source is required to implement the onboard charger function, may control the power factor correction circuit to be electrically connected to the stator windings of the motor, may control the power factor correction circuit to form a current flow toward the stator windings of the motor so as to operate as the AC-DC converter, and may control the motor inverter to form a current flow from the stator windings of the motor toward the battery so as to operate as the DC-DC boost converter.

The controller, when a commercial AC output to the outside from the battery is required, may control the power factor correction circuit to be electrically connected to the stator windings of the motor, may control the motor inverter to form a current flow from the battery to the stator windings of the motor so as to operate as the DC-DC buck converter, and may control the power factor correction circuit to form a current flow from the stator windings of the motor toward an output element for supplying the commercial AC power, so as to operate as the DC-AC converter.

The charging system according to another embodiment of the present invention may further include a fast charging line configured to be electrically connectable to an external DC fast charging power source for fast charging of the battery and to be selectively electrically connectable to the stator windings of the motor. The controller, when charging of the battery by the DC fast charging power source is required, may control the fast charging line to be electrically connected to the stator windings of the motor, and may control the motor inverter to form a current flow from the stator windings of the motor toward the battery so as to operate as the DC-DC boost converter.

A charging system for an electric vehicle, configured to charge a battery of the electric vehicle, according to an embodiment of the present invention includes: a stator windings of a motor of the electric vehicle; a motor inverter electrically connected to the stator windings and configured to selectively operate as one of a DC-AC inverter, a DC-DC boost converter, a DC-DC buck converter, and an AC-DC converter through implementation of bidirectional current flow; a power factor correction circuit configured to be selectively electrically connected to the stator windings and to selectively operate as either an AC-DC converter or a DC-AC converter through implementation of bidirectional current flow; a fast charging line configured to be selectively electrically connected to the stator windings and to be electrically connectable to an external fast charging power source; and a controller configured to control the selective electrical connection of the PFC circuit and the fast charging line to the stator windings, and to control operation of the motor inverter and the power factor correction circuit. The controller, when driving of the motor is required, controls the PFC circuit to be electrically disconnected from the stator windings and controls the motor inverter to form a current flow from the battery to the stator windings so as to operate as the DC-AC inverter. The controller, when charging of the battery by an AC power source is required, controls the power factor correction circuit to be electrically connected to the stator windings, controls the power factor correction circuit to form a current flow toward the stator windings so as to operate as the AC-DC converter, and controls the motor inverter to form a current flow from the stator windings to the battery so as to operate as the DC-DC boost converter. The controller, when output of power from the battery to the outside is required, controls the power factor correction circuit to be electrically connected to the stator windings, controls the motor inverter to form a current flow from the battery to the stator windings so as to operate as the DC-DC buck converter, and controls the power factor correction circuit to form a current flow from the stator windings toward an output element for supplying power so as to operate as the DC-AC converter. The controller, when charging of the battery by the fast charging power source is required, controls the fast charging line to be electrically connected to the stator windings and controls the motor inverter to form a current flow from the stator windings to the battery so as to operate as the DC-DC boost converter.

The motor may be a three-phase electric motor including three motor stator windings, the motor inverter may include a switching module having three half bridges respectively electrically connected to the motor stator windings of the three-phase electric motor, and the power factor correction circuit may be configured to have the same topology as the motor inverter.

### [Effect of the Invention]

According to the present invention, by utilizing the motor inverter for driving the motor as a DC-DC converter for implementing the onboard charger function, the charging system can be made more compact.

### [Brief Description of the Drawings]

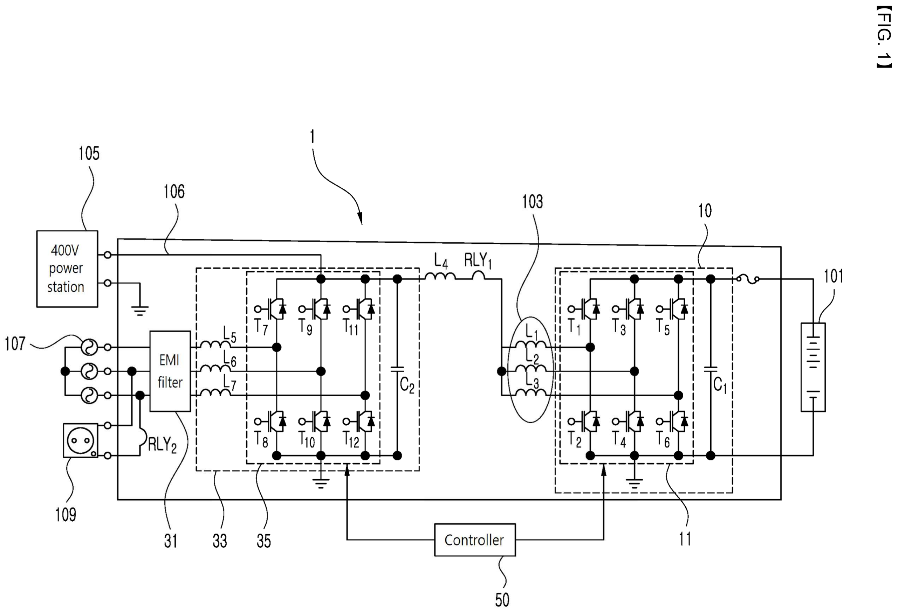

FIG. 1 is a diagram showing the configuration of a charging system for an electric vehicle according to an embodiment of the present invention.

### [Best Mode for Carrying Out the Invention]

Hereinafter, embodiments of the present invention will be described in detail with reference to the accompanying drawings.

Referring to FIG. 1, a charging system 1 for an electric vehicle according to an embodiment of the present invention includes a motor inverter 10 and a controller 50.

The charging system 1 for an electric vehicle according to an embodiment of the present invention is configured to selectively perform a function of charging a battery 101 of the electric vehicle and a function of supplying power of the battery 101 to an external commercial AC load. In addition, the charging system 1 for an electric vehicle according to the present invention is configured to selectively perform fast charging using a DC high-voltage power supply, for example, a 400V DC power supply, and slow charging using a commercial AC power supply. During the execution of these various functions, the motor inverter 10, which is an element for driving the motor 103, is used as a boost converter, which is a step-up DC-DC converter, during fast or slow charging, and as a buck converter, which is a step-down DC-DC converter, when supplying power to an external commercial AC load. In other words, in the embodiment of the present invention, the motor inverter 10 for driving the motor 103 is not only used as a DC-AC inverter when driving the motor 103, but also used as a boost converter during slow charging by a so-called onboard charger and during fast charging with a high-voltage power supply, and as a buck converter when supplying the power of the battery 101 to an external load. Through such sharing of the motor inverter 10, it is possible to eliminate a separate DC-DC converter, which is a component of a conventional onboard charger. As a result, the weight and cost of the charging system can be reduced, and a compact structure can be achieved.

The motor inverter 10 can be used for the main drive source and regenerative braking of an electric vehicle in which the motor 103 serves as the power source. The motor inverter 10 receives the high voltage of the battery 101, for example, 800V DC, and converts it into AC by varying the voltage and frequency so as to drive the motor 103, then applies it to the motor 103. The motor 103 may be various types of electric motors, for example, an induction motor (IM), an interior permanent magnet synchronous motor (IPMSM) among a synchronous motor (SM), a switched reluctance motor (SRM), or the like. Specifically, as shown in FIG. 1, the motor 103 may be a three-phase electric motor. The charging system for an electric vehicle according to an embodiment of the present invention applies the motor inverter 10 for the purpose of charging the electric vehicle or supplying the power of the electric vehicle to an external commercial AC power source, based on the insight that a motor inverter for driving the motor is generally not in operation except when the vehicle is being driven.

As shown in FIG. 1, the motor inverter 10 may include a switching module 11 having three half bridges connected to each phase of the motor 103, and a capacitor C1 connected in parallel with the switching module 11. The switching module 11 performs a power conversion function, forming a current flow from the battery 101 to the motor 103 to carry out a DC-AC inverting function or a DC-DC buck converting function, and forming a current flow from the motor 103 to the battery 101 to perform a DC-DC boost converting function. Although FIG. 1 illustratively shows a case where a single capacitor C1 is provided, two or more capacitors connected in parallel may also be provided.

As shown in FIG. 1, the switching module 11 includes three half bridges formed by power conversion switching elements T₁, T₂, T₃, T₄, T₅, and T₆, and the midpoints of the three half bridges are respectively connected to the motor stator windings of the motor 103, namely inductors L₁, L₂, and L₃. The power conversion switching elements may be IGBTs, SiC MOSFETs, or Si MOSFETs having an active switching function, with either built-in reverse body diodes or additional reverse diodes. The three half bridges of the switching module 11, which perform the power conversion function for driving the motor 103, can be controlled to convert the DC voltage of the high-voltage battery 101 into the driving voltage and frequency of the motor 103 by applying techniques such as Space Vector Pulse Width Modulation (SVPWM), Field Oriented Control (FOC), or Direct Bang-bang Control (DC), thereby enabling control of motor torque and speed.

When driving the three-phase motor 103, the three half bridges of the motor inverter 10 are configured in a parallel connection, and in the case of driving a multiphase motor, the parallel connection may be configured with the same number of half bridges as the number of motor phases.

When the motor 103 operates to generate driving force for the electric vehicle, the motor inverter 10 performs a DC-AC conversion function that converts the DC voltage of the battery 101 into an AC voltage. At this time, the switching module 10 is controlled to form a current flow to the windings of the motor 103, and the motor inverter 10 together with the inductors L₁, L₂, and L₃ of the motor 103 operates as a DC-AC converter that converts the DC voltage into an AC voltage. In this case, the motor 103 functions as an AC load.

Meanwhile, since the motor 103 has a structure in which three inductances with large current capacity are connected to a neutral point, and the windings of the motor 103 are connected to the midpoints of the three half bridges of the motor inverter 10, it can be seen that when the motor 103 does not act as a load, the motor 103 and the motor inverter 10 form a topology of a non-isolating boost converter and a non-isolating buck converter depending on the direction of current flow.

Based on these structural characteristics of the motor 103 and the motor inverter 10, the motor 103 and the motor inverter 10 are utilized during high-speed charging, slow charging, and commercial AC power supply. Accordingly, when the motor 103 is used to generate the driving force of the electric vehicle, the motor inverter 10 is used as a DC-AC inverter, and in contrast, when a DC voltage is applied to the stator winding neutral point of the motor 103, the motor 103 and the motor inverter 10 can be used as a step-up DC-DC converter that boosts the DC voltage and supplies it to the high-voltage battery 101, and conversely, when a voltage is lowered from the terminal of the high-voltage battery 101 to the winding neutral point of the motor 103 to allow current flow, they can be used as a step-down DC-DC converter. In order to use the motor 103 and the motor inverter 10 as a DC-AC inverter or DC-DC converter in this manner, it is necessary that the neutral point of the motor 103 be connected to or disconnected from an external terminal, and for this purpose, a switching means having an on/off function, for example, a relay RLY₁, is provided.

In addition, the motor 103 and the motor inverter 10 can operate as a DC-DC boosting converter, enabling an 800V high-voltage battery for a vehicle to be charged using, for example, a fast charging station that supplies 400V and 50kW DC voltage. As a result, charging of an 800V battery can be achieved by utilizing a 400V fast charging station.

The controller 50 controls the operation of the switching module 11 of the motor inverter 10 and the relay RLY₁ so that the above-described functions can be implemented. For example, when the motor 103 needs to generate the driving force of the electric vehicle, the controller 50 controls the switching module 11 to perform the DC-AC inverter function and turns off the relay RLY₁.

Meanwhile, when the battery 101 needs to be charged using an external power station 105, for example, a 400V power station, the controller 50 can turn on the relay RLY₁ and control the switching module 11 to perform the DC-DC converter function. A fast charging line 106, which can be electrically connected to the power station 105, may be provided, and the fast charging line 106 can be selectively electrically connected to the inductors L₁, L₂, and L₃ of the motor 103 through a switching means, for example, the relay RLY₁. At this time, in order to reduce current ripple during charging, a charging input inductor L₄ may be connected in series between the power station 105 and the motor 103. Accordingly, when the charging system of the electric vehicle is electrically connected to an external charging power source, for example, the 400V power station 105, the controller 50 turns on the relay RLY₁ and operates the motor inverter 10 as a DC-DC boosting converter that converts 400V to 800V, thereby enabling charging of the 800V battery 101 using the 400V fast charging station.

Meanwhile, the charging system 1 for an electric vehicle according to an embodiment of the present invention includes, as elements for implementing the vehicle-mounted charger function for slow charging using an AC power source, i.e., the so-called onboard charger (OBC) function, an EMI filter 31 and a power factor correction (PFC) circuit 33. For example, the onboard charger may be a device that converts a single-phase 60Hz AC power supply (hereinafter referred to as AC power) into a DC power source capable of charging the high-voltage battery 101. A conventional onboard charger may be implemented in the form of an AC charging terminal, an AC-DC converter, an isolation transformer, and a DC-DC converter. Functionally, when AC power is supplied, the AC voltage passes through the input EMI filter 31 and is converted into a pulsating DC voltage through the power factor correction circuit 33 that converts the AC voltage to DC voltage, and then, in order to further convert it into a DC voltage suitable for charging the high-voltage battery 101, it passes through a DC-DC converter including an isolation transformer, thereby charging the battery 101. However, the onboard charger function of the charging system according to an embodiment of the present invention may be configured with a two-stage architecture in which the first stage is AC-DC conversion and the second stage is DC-DC conversion. The AC-DC conversion may be performed by the EMI filter 31 and the PFC circuit 33, while the DC-DC conversion may be performed by the motor 103 and the motor inverter 10.

The EMI filter 31 functions to prevent high-frequency components generated during switching from negatively affecting the commercial AC power system. EMI refers to electromagnetic interference, or radio frequency interference, meaning that radiated or conducted electromagnetic waves affect other electronic devices. Since the system for slow charging is directly connected to the input power source (commercial AC power), which serves as the power supply, the EMI filter 31 is provided to minimize the inflow of noise generated in the slow charging system into the grid power.

The PFC circuit 33 may be configured as a circuit that performs a power factor correction (PFC) function. The power factor correction function means that the OBC makes the phase of the voltage and current on the AC side identical, that is, adjusts the power factor (PF) to 1. By means of the PFC function, the power factor on the grid side can be brought to 1, thereby eliminating the reactive power portion that would otherwise be unnecessarily wasted.

In the embodiment of the present invention, the PFC circuit 33 is configured to have the same topology as the motor 103 and the motor inverter 10. Referring to FIG. 1, the PFC circuit 33 includes three inductors L₅, L₆, and L₇ having the same capacity as the inverter of the motor 103, and a switching module 35 including three half bridges identical to those of the motor inverter 10. The PFC circuit 33 may be implemented as a three-phase full-bridge PFC using a three-phase power supply, and the switching module 35 may include three half bridges having the same topology as the motor inverter 10. The switching module 35 includes three half bridges formed by the power conversion switching elements T₇, T₈, T₉, T₁₀, T₁₁, and T₁₂, and the midpoints of the three half bridges are respectively connected to the EMI filter 31 through the inductors L₅, L₆, and L₇. As such, when using a three-phase AC power supply, the switching module of the PFC circuit may be configured as a parallel connection of three half bridges. Alternatively, when using a single-phase AC power supply, the switching module of the PFC circuit may be configured as a parallel connection of two half bridges.

The PFC circuit 33 may be connected to the motor stator windings of the motor 103, namely the inductors L₁, L₂, and L₃, through the charging input inductor L₄, thereby reducing current ripple.

Excluding the EMI filter 31 on the commercial AC power side of the onboard charger, in the case of current flow from the commercial AC power source toward the high-voltage battery 101, when the three half bridges and three inductors are controlled such that AC input current flows through the inductors in the form of an AC voltage, the PFC circuit 33 is controlled to operate as an AC-DC converter implementing the PFC function. Meanwhile, in the case of controlling current flow from the battery 101 to the commercial AC power source, the PFC circuit 33 is controlled to operate as a DC-AC inverter that converts DC voltage into an AC sine wave. Such operation control of the PFC circuit 33 may be carried out through PWM control by the controller 50.

The PFC circuit 33 may include a capacitor C2, which may be connected in parallel with the switching module 35. Although FIG. 1 illustratively shows a case where a single capacitor C2 is provided, two or more capacitors connected in parallel may also be included. The capacitor C2 performs the function of reducing current ripple and also protecting the battery 101 from voltage spikes, EMI, and the like.

The second stage of the onboard charger function of the charging system according to an embodiment of the present invention, namely DC-DC conversion, is performed by the motor stator windings and the motor inverter 10. The output terminal of the PFC circuit 33, which operates as an AC-DC converter, is connected to the neutral point of the motor 103 through the relay RLY1, thereby being connected to the motor inverter 10. The motor inverter 10 boosts the DC obtained from rectifying the AC through the PFC circuit into a DC voltage required by the battery 101. At this time, control is applied so that a current flow is formed from the windings of the motor 103 to the switching module 11, which performs the power conversion function, and the windings of the motor 103 and the switching module 11 thereby operate as a boost converter performing voltage step-up.

As described above, by allowing current to flow from the battery 101 to the commercial AC power side, the system can be used for functions such as Vehicle to Load (V2L), Vehicle to Vehicle (V2V), Vehicle to Grid (V2G), and Vehicle to Home (V2H). These functions utilize the battery 101 of the electric vehicle as a mobile energy storage system (ESS).

For the implementation of V2L, a single-phase commercial AC power supply is generated, and power can be supplied to 220V single-phase driven products through a power output element provided in the electric vehicle, for example, an outlet 109, via the single-phase output terminal. A switching means, for example, a relay RLY2, may be provided for turning the electrical connection of the outlet 109 for the V2L function on or off, and the relay RLY2 may be configured to be switched on or off by the controller 50. Trough the operation of the relay RLY2, the power supplied to the outlet 109 can be cut off when safety is required or under necessary conditions.

In the case of generating three-phase power, the PFC circuit 33 is controlled to generate commercial power in the form of a three-phase sine wave, thereby implementing V2V, V2G, and V2H functions by supplying three-phase power through a three-phase output terminal. At this time, the motor inverter 10 operates as a DC-DC converter that steps down the voltage of the battery 101, and the PFC circuit 33 performs the DC-AC inverter function of converting the DC voltage stepped down by the motor inverter 10 into an AC voltage.

According to an embodiment of the present invention, as described above, the motor inverter 10 is configured to perform multiple functions: DC-AC conversion when driving the motor, DC-DC step-up when used as a boost converter for the OBC, DC-DC step-up when used as a boost converter for 400V fast charging, and DC-DC step-down when used as a buck converter for supplying commercial AC power from the battery 101. As a result, the configuration of the charging system can be simplified and efficiency can be improved. In particular, by utilizing the motor inverter for driving the motor as a boost converter for performing the OBC function, a separate DC-DC converter for performing the OBC function can be omitted.

The controller 50 can perform control to implement the above-described functions. In addition, sensors (not shown) for measuring voltage, current, and other parameters of each part required for control, as well as relays (not shown), may be provided, and the controller 50 may be configured to perform the necessary control based on the current, voltage, and other values measured by the sensors.

Although embodiments of the present invention have been described above, the scope of the present invention is not limited thereto, and it should be understood to include all modifications and alterations that may be readily made by those skilled in the art to which the invention pertains, within the scope deemed equivalent to the embodiments of the present invention.

## Claims

1. A charging system for an electric vehicle, configured to charge a battery of the electric vehicle, comprising:
a motor inverter configured to act as a DC-AC inverter to convert a DC voltage of the battery into an AC voltage capable of driving a motor of the electric vehicle, and to apply the AC voltage to stator windings of the motor;
a power factor correction circuit configured to act as an AC-DC converter to implement an onboard charger function for charging the battery using a commercial AC power source, and to be selectively electrically connected to the stator windings of the motor;
an inductor connected in series between the stator windings of the motor and the power factor correction circuit; and
a controller configured to control electrical connection of the power factor correction circuit to the stator windings of the motor, and to control operation of the motor inverter and the PFC circuit,
wherein the motor inverter is configured, under control of the controller, to selectively form bidirectional current flow and thereby selectively operate as one of a DC-AC inverter, a DC-DC boost converter, and a DC-DC buck converter, and
wherein the power factor correction circuit is configured, under control of the controller, to selectively form bidirectional current flow and thereby selectively operate as either an AC-DC converter or a DC-AC converter.

2. The charging system for an electric vehicle according to claim 1, wherein the controller, when driving of the motor is required, controls the power factor correction circuit to be electrically disconnected from the stator windings of the motor, and controls the motor inverter to form a current flow from the battery to the stator windings of the motor so as to operate as the DC-AC inverter.

3. The charging system for an electric vehicle according to claim 1, wherein the controller, when charging of the battery by the commercial AC power source is required to implement the onboard charger function, controls the power factor correction circuit to be electrically connected to the stator windings of the motor, controls the power factor correction circuit to form a current flow toward the stator windings of the motor so as to operate as the AC-DC converter, and controls the motor inverter to form a current flow from the stator windings of the motor toward the battery so as to operate as the DC-DC boost converter.

4. The charging system for an electric vehicle according to claim 1, wherein the controller, when a commercial AC output to the outside from the battery is required, controls the power factor correction circuit to be electrically connected to the stator windings of the motor, controls the motor inverter to form a current flow from the battery to the stator windings of the motor so as to operate as the DC-DC buck converter, and controls the power factor correction circuit to form a current flow from the stator windings of the motor toward an output element for supplying the commercial AC power, so as to operate as the DC-AC converter.

5. The charging system for an electric vehicle according to claim 1, further comprising a fast charging line configured to be electrically connectable to an external DC fast charging power source for fast charging of the battery and to be selectively electrically connectable to the stator windings of the motor,
wherein the controller, when charging of the battery by the DC fast charging power source is required, controls the fast charging line to be electrically connected to the stator windings of the motor, and controls the motor inverter to form a current flow from the stator windings of the motor toward the battery so as to operate as the DC-DC boost converter.

6. A charging system for an electric vehicle, configured to charge a battery of the electric vehicle, comprising:
a stator windings of a motor of the electric vehicle;
a motor inverter electrically connected to the stator windings and configured to selectively operate as one of a DC-AC inverter, a DC-DC boost converter, a DC-DC buck converter, and an AC-DC converter through implementation of bidirectional current flow;
a power factor correction circuit configured to be selectively electrically connected to the stator windings and to selectively operate as either an AC-DC converter or a DC-AC converter through implementation of bidirectional current flow;
a fast charging line configured to be selectively electrically connected to the stator windings and to be electrically connectable to an external fast charging power source; and
a controller configured to control the selective electrical connection of the PFC circuit and the fast charging line to the stator windings, and to control operation of the motor inverter and the power factor correction circuit,
wherein the controller, when driving of the motor is required, controls the PFC circuit to be electrically disconnected from the stator windings and controls the motor inverter to form a current flow from the battery to the stator windings so as to operate as the DC-AC inverter,
wherein the controller, when charging of the battery by an AC power source is required, controls the power factor correction circuit to be electrically connected to the stator windings, controls the power factor correction circuit to form a current flow toward the stator windings so as to operate as the AC-DC converter, and controls the motor inverter to form a current flow from the stator windings to the battery so as to operate as the DC-DC boost converter,
wherein the controller, when output of power from the battery to the outside is required, controls the power factor correction circuit to be electrically connected to the stator windings, controls the motor inverter to form a current flow from the battery to the stator windings so as to operate as the DC-DC buck converter, and controls the power factor correction circuit to form a current flow from the stator windings toward an output element for supplying power so as to operate as the DC-AC converter, and
wherein the controller, when charging of the battery by the fast charging power source is required, controls the fast charging line to be electrically connected to the stator windings and controls the motor inverter to form a current flow from the stator windings to the battery so as to operate as the DC-DC boost converter.

7. The charging system for an electric vehicle according to claim 6, wherein the motor is a three-phase electric motor including three motor stator windings,
wherein the motor inverter comprises a switching module having three half bridges respectively electrically connected to the motor stator windings of the three-phase electric motor, and
wherein the power factor correction circuit is configured to have the same topology as the motor inverter.
